# EUROPEAN PATENT APPLICATION

(11) **EP 4 556 545 A1**
(43) Date of publication of application: **21.05.2025**
(21) Application number: 23209743.6
(22) Date of filing: 14.11.2023
(51) Int. Cl.: C10B 47/44

(54) **HYDROCARBON COMPOUND MIXTURE WITH IMPROVED PROPERTIES OBTAINED FROM PLASTIC WASTE MATERIALS**

(71) Applicant: Makeen Energy A/S, 8940 Randers SV (DK)
(72) Inventor: Grønbech Møller, Morten, 8930 Randers NØ (DK); Volsmann Simonsen, Mathias, 8200 Aarhus N (DK)
(74) Representative: Michalski Hüttermann & Partner Patentanwälte mbB

(57) **Abstract**

The invention relates to a hydrocarbon compound mixture having a cloud point of ≤15°C and being transparent in layers of 40 mm in thickness at 20°C in accordance with the relevant standard test method for measuring the cloud point, obtained by a process of converting plastic waste materials into liquid hydrocarbon compound mixtures. The invention further relates to a process for the conversion of plastic waste materials into such liquid hydrocarbon compound mixtures, and to the use of that hydrocarbon compound mixture as feedstock for a refinery crude unit or a steam cracker.

## Description

### FIELD OF THE INVENTION

The invention relates to a hydrocarbon compound mixture with improved properties that is obtained by a process of converting plastic waste materials into liquid hydrocarbon compound mixtures.

### BACKGROUND OF THE INVENTION

The world-wide production of plastic materials has increased dramatically during the last decades. Plastic materials have significant advantages such as chemical and mechanical stability and low weight, and the properties of the plastic materials can be adjusted during the production process to meet the requirements of a wide variety of applications. However, after its use a major part of the plastic materials is currently dispatched for incineration or landfill, or even end up in nature. Today plastic materials are usually made from fossil feedstocks and a significant part of the plastics produced are still designed for a single use. According to the European Commission (published on its website in 2023), almost 26 million tons of plastic waste is generated in Europe every year and the European Commission is addressing the negative impact of such plastic waste generation in several policies.

There are several attempts to re-use plastic materials through recycling and to create a circular process for the re-use of plastic materials as raw material for new plastic materials. One approach for such a circular process is the conversion of waste plastic materials by thermal decomposition, or pyrolysis, into oily hydrocarbon compound mixtures that can be used as alternative feedstock in oil refinery crude units or steam crackers. For such re-use the hydrocarbon compound mixtures should meet certain quality requirements and such quality requirements become more and more relevant the higher the percentage of such hydrocarbon compound mixtures in the feed of an oil refinery crude unit or a steam cracker is.

Several processes for the conversion of waste plastic materials into oil products by thermal decomposition or pyrolysis are already known.

US20160024390A1 discloses a dual stage pyrolysis apparatus for the continuous conversion of hydrocarbon materials to condensable, non-condensable and solid hydrocarbon materials. The apparatus comprises at least one extruder capable of providing shear force and heat and having three or more treatment zones, a continuous process thermal kiln reactor, said extruder and said kiln reactor being in fluid communication, and means for transporting the hydrocarbon materials through the apparatus. The hydrocarbon materials are maintained within zones for a range of defined temperature and residence times, wherein the extruder has at least three zones, and the kiln reactor comprises at least two zones. During the process, waxes are removed from the reactor as solid materials.

WO2019202546A1 discloses a pyrolysis plant for the thermal depolymerization of plastic material. The plant includes a closed vessel of a reactor to which a feeder for the supply of the plastic material is connected and where the reactor vessel has an output of gaseous products resulting from the depolymerisation, has a mechanical mixer and an output for the removal of unevaporated heavier fractions.

WO2022013712A1 discloses a method for pyrolysis of waste material. The method comprises providing a screw arrangement adapted to supply heat to the mass by mechanical shear, providing a reactor after the screw arrangement, adapted to supply heat to the mass in the absence of oxygen by heating the reactor wall, heating the mass to an exit temperature and increasing the pressure to an exit pressure in the screw arrangement, thermally degrading the mass in the reactor, wherein the mass is brought into an extreme condition at the exit temperature and exit pressure by the screw arrangement, such that during the pressure drop pyrolysis occurs, thereby forming gaseous hydrocarbons within the connecting element.

US20210189252A1 and US20210189254A1 disclose a circular economic approach for the recycling of polyethylene and polypropylene waste plastics through oil refinery operations. Typical pyrolysis oils were obtained from commercial sources and their properties are summarized. These pyrolysis samples were prepared from waste plastics containing mostly polyethylene and polypropylene via thermal decomposition in a pyrolysis reactor at around 400-600 °C and the 99.5% Final Boiling Point of such samples are between 888°F and 1079°F corresponding to about 475°C and 581°C.

The above-mentioned publications are either silent about the quality of the pyrolysis oil resulting from the disclosed processes or reveal properties of the pyrolysis oils that indicate significant fractions with high boiling points above 450°C. Significant amounts of such high boiling fractions are an indicator for an insufficient pyrolysis reaction and high portions of hydrocarbon compounds with long carbon chains such as waxes.

### SUMMARY OF THE INVENTION

It is an object of the instant invention to provide hydrocarbon compound mixtures obtained from plastic waste materials that have improved properties, and that can be used in large quantities as alternative to fossil feedstock in oil refineries and steam cracker operations.

It is a further objective of the instant invention to provide the process steps for the conversion of plastic waste materials into hydrocarbon compound materials by which the hydrocarbon compound materials with improved properties can be obtained.

Accordingly, we have found a hydrocarbon compound mixture obtained from plastic waste materials with improved properties and the process steps by which such improve hydrocarbon compound mixtures can be obtained.

In a first aspect of the invention we have found a hydrocarbon compound mixture having a cloud point of ≤15°C and being transparent in layers of 40 mm in thickness at 20°C in accordance with the relevant standard test method for measuring the cloud point, obtained by a process of converting plastic waste materials into liquid hydrocarbon compound mixtures.

More specifically, we have found a hydrocarbon compound mixture having a cloud point of ≤15°C, measured according to ASTM D2500-23, and being transparent in layers of 40 mm in thickness at 20°C in accordance with that ASTM D2500-23 standard test method for measuring the cloud point, obtained by a process of converting plastic waste materials into liquid hydrocarbon compound mixtures.

A high cloud point is an indicator of fractions within the hydrocarbon compound mixture that have a high molecular weight and/or long carbon chains such as waxes, and that tend to precipitate from the oily hydrocarbon compound mixture. The precipitation of such fractions can lead to pollution of storage, transport and conveyor equipment at the production plant, the transport for further processing and at the facilities of the oil refinery or steam cracker and it is desired to limit such pollution to a minimum.

In a preferred embodiment of this invention, the hydrocarbon compound mixture has a cloud point of ≤5°C, even more preferably of ≤-5°C, still more preferably of ≤-15°C, and still more preferably of ≤-25°C.

As a further aspect of the invention we have found a hydrocarbon compound mixture, wherein the hydrocarbon mixture has a final boiling point for 99.5wt% of the mixture of ≤430°C, preferably ≤420°C, even more preferably ≤410°C, and still further preferably ≤400°C.

In particular, we have found a hydrocarbon compound mixture, wherein the hydrocarbon mixture has a final boiling point (measured according to ASTM D2887-22) for 99.5wt% of the mixture of ≤430°C, preferably ≤420°C, even more preferably ≤410°C, and still further preferably ≤400°C.

The hydrocarbon compound mixture according to this invention can be obtained by applying a process comprising certain process steps.

According to a preferred embodiment of this invention, the hydrocarbon compound mixture is obtained by a process comprising the following steps:
A) melting and degassing the plastic waste material,
B) pyrolyzing the melted plastic waste material in an apparatus comprising at least 2 different pyrolysis compartments in which pyrolysis vapour is created, the vapour within the first of such compartments having a higher temperature than the vapour within the second compartment, and the at least 2 compartments having interconnections to allow vapour formed in the first compartment to move to the second compartment and to allow liquid formed in the second compartment moving back to the first compartment,
C) condensing the vapour resulting from the last of the at least 2 compartments to obtain a liquid hydrocarbon compound mixture.

In addition to these process steps, it is an advantage to prepare the plastic waste material for the above-mentioned process steps. Advantageously, the plastic waste material is initially heated and compressed in a densifying unit. The applied heat is causing a part of the unwanted gases and water to evaporate and decreases the viscosity of the plastic waste materials so that it is starting to melt.

In process step A) the plastic waste material is then further heated until it is substantially melted. During that step further unwanted gases are evaporated. The optimal temperature applied during step A) depends on the kind of plastics that are processed and the kind and amount of unwanted gases present in the plastic waste material. In a preferred embodiment, that is applicable for many of the common plastic waste mixtures, the final temperature of step A) is set to a range from 220 to 340°C, preferably to 240 to 320°C. The temperature ranges mentioned above refer to the temperature at the end of this process step, when the material has reached its final temperature. When the material is entering the unit in which step A) is performed it can still have a lower temperature resulting from a previous preparation step and the material is heated up within the unit in which step A) is performed until the temperature set point is achieved. The material entering the unit in which step A) is performed can e.g. have a temperature between 150 and 200°C.

During the melting and degassing step, the viscosity of the mixture is further decreased so that the mixture can be easier conveyed to the compartments in which the actual pyrolysis is performed. Furthermore, it prevents particular corrosive gases and/or air to enter the compartments in which the pyrolysis occurs.

In process step B) the melted plastic waste material undergoes a controlled decomposition or pyrolysis reaction. According to the invention, that pyrolysis reaction is performed in an apparatus having at least 2 different compartments. That means that the compartments are physically segregated so that the process conditions, in particular the temperature, can be precisely and independently controlled in each of the compartments. The first compartment is usually set to a temperature that is higher than the temperature in the second compartment. In this context, the first compartment shall mean the compartment into which the material after having undergone step A) is first entering. The higher temperature compared with the temperature applied in process step A) is causing the melted plastic material to start a fast pyrolysis reaction. Caused by the vapour pressure, the vapor resulting from this pyrolysis reaction is continuously leaving the first compartment through an interconnection with the second compartment in which it is further processed.

In the second compartment a part of the vapour leaving the first compartment is condensed because the temperature in the second compartment is lower than the temperature of the first compartment. As a result, an oil phase is accumulating at the bottom of that second compartment. That oil phase is further pyrolyzed in the second compartment controlled by the applied temperature settings. According to a preferred embodiment of this invention, the vapour leaving the first compartment is introduced in the oil phase of the second compartment through a pipe that is dipped into the oil phase. By that means the vapour is more efficiently cooled to the temperature of the second compartment and it is avoided that a substantial part of the vapour is leaving the second compartment without further exposure to the pyrolysis conditions of the second compartment.

The apparatus in which the pyrolysis steps occur is further equipped with an interconnection between the second and the first compartment that allows liquid such as the oil phase present in the second compartment moving back to the first compartment. That back flow of liquid is preferably performed in a controlled manner, e.g. controlled by valves within such interconnection, so that the oil level in the second compartment, the liquid level in the first compartment and the residence time in the 2 compartments can be controlled.

The process steps applied according to this invention allow the operators to vary several process parameters in a way that the throughput through the apparatus and the properties of the resulting hydrocarbon compound mixtures can be precisely adjusted. In particular, the feed rate to the first compartment, the temperatures in the first and the second compartment and the back flow of liquid material from the second compartment to the first compartment are relevant variables that permit the production of the desired product quality.

According to a preferred embodiment of this invention, an inventive hydrocarbon compound mixture is obtained by a process, wherein the vapor temperature within the first compartment is set to a range between ≥400°C and ≤500°C, preferably between ≥420°C and ≤460°C.

According to preferred embodiment of this invention, an inventive hydrocarbon compound mixture is obtained by a process, wherein the vapour temperature within the second compartment is set to a range between ≥350°C and ≤450°C, preferably between ≥370°C and ≤400°C.

The fine-tuning of such temperature settings depends on the composition of the plastic waste material, the desired throughput through the apparatus and the back flow rate of liquid from the second to the first compartment and a skilled operator can optimize these process variables by measuring the desired quality of the final hydrocarbon compound mixture as a function of small variations of the process variables.

From the description of the above-mentioned process steps it is clear that the pyrolysis reaction in the first compartment is performed under harsher conditions so that more decomposition occurs in the first compartment compared with the second compartment. That means that the first compartment is usually set to a residence time and temperature condition that allow for an efficient decomposition of the bulk of the plastic waste materials. The residence time and temperature settings in the second compartment are then adjusted to the fine-tuning of the pyrolysis reaction so that the decomposition can reach the desired degree and the quality of the final hydrocarbon compound mixture can be optimized.

According to a preferred embodiment of this invention, an inventive hydrocarbon compound mixture is obtained by a process, wherein the vapour temperature within the first compartment is at least 10°C higher than the second compartment, preferably at least 20°C higher and even more preferably at least 30°C higher.

Beside the temperature, the residence time is an important parameter to control the quality of the final hydrocarbon compound mixture. The residence time of the pyrolysis mixture in the first compartment is in particular controlled by the feed of raw material into the compartment, by the back flow ratio of oil from the second compartment and by the temperature applied in the first compartment. It is often desired to obtain a degree of decomposition that is high enough to obtain homogeneous liquid hydrocarbon compound mixtures, but the degree of decomposition should not be too high because the further cracking in an oil refinery crude unit or a steam cracker can often be performed under energetically advantageous conditions and can in particular be fine-tuned for obtaining the desired end-product of a refinery or steam cracker. It is an advantage of the apparatus and the process steps as described in this invention to provide the flexibility to obtain a variety of high-quality hydrocarbon compound mixtures by variations of the above-mentioned process conditions, including the residence time in the compartments.

According to a preferred embodiment of this invention, an inventive hydrocarbon compound mixture is obtained by a process, wherein the average residence time of the reaction mixture in the first compartment is between 30 and 240 minutes, preferably between 60 and 180 minutes, and even more preferably between 90 and 150 minutes.

According to another preferred embodiment of this invention, an inventive hydrocarbon compound mixture is obtained by a process, wherein the average residence time of the reaction mixture in the second compartment is between 30 and 240 minutes, preferably between 60 and 180 minutes, and even more preferably between 90 and 150 minutes.

The above-mentioned average residence times are the residence times that can be calculated from the feed of liquid or molten plastic waste material obtained from the previous process step into the respective first or following compartment and the volume occupied by liquid within that respective compartment. In a continuous process at steady state conditions, the residence time can be determined based on the feed, without adding the back flow from the second compartment, into the first compartment and the volume occupied by liquid within that first compartment.

The quality of the final hydrocarbon compound mixture can even be further improved by using an apparatus that comprises an additional compartment in which pyrolysis can occur. According to a preferred embodiment of this invention, an inventive hydrocarbon compound mixture is obtained by a process, wherein the apparatus comprises 3 different compartments and the third compartment having a lower vapour temperature than the second compartment, and the second and the third compartments having one or more interconnections to allow vapour formed in the second compartment to move to the third compartments, and to allow liquid formed in the third compartment moving back to the second compartment.

The options for controlling the process described in the section related to the interconnections between the first and the second compartment apply, *mutatis mutandis,* also to the interconnections between the third and the second compartment. The third compartment permits further fine-tuning of the final product specification and quality and allows the production of an even more homogeneous hydrocarbon compound mixture with the desired cloud points and final boiling points. In a preferred embodiment of this invention, the third compartment can be designed as one or more reflux condensers, in which, depending on the temperature settings, part or all of the vapour leaving the second compartment is condensed and is permitted to return to the second compartment for a continuation of the pyrolysis reaction, until that pyrolysis reaction has advanced to a stage that a part of the vapour entering the one or more reflux condensers will not condense anymore but will leave the reflux condenser(s) and is allowed to proceed to the condensation step C).

In principle the 2 or more compartments can be arranged in several ways or geometries, horizontally or vertically, or even with a certain physical distance from each other. However, from an economic perspective it is an advantage, to have the compartments close to each other and in a vertical arrangement.

According to a preferred embodiment of this invention, an inventive hydrocarbon compound mixture is obtained by a process, wherein all of the at least 2 compartments are arranged in a way that the first compartment is located at the lowest level and the consecutive compartment(s) is/are located above the respective prior compartment.

In process step C), the vapour that has passed the cooling means of the last of the compartments is condensed to obtain a liquid hydrocarbon mixture. That cooling can be achieved by standard cooling means such as shell and tube heat exchangers.

According to a preferred embodiment of this invention, an inventive hydrocarbon compound mixture is obtained by a process, wherein the exit temperature of the unit in which the condensation of step C) is taking place is set to a value below 180°C.

It is also possible to arrange step C) as a cascaded condensation step if a fractionation of the condensate is desired. In such case, additional condensers cooling to different temperatures can be used. The final exit temperature of the condensers that are involved in process step C) is preferably set to ambient temperature such as between 20 and 30°C.

According to a preferred embodiment of this invention, an inventive hydrocarbon compound mixture is obtained by a process, wherein the condensation of process step C) is taking place in more than one condensing units and at least 2 of such condensing units are operated at different temperatures.

It is apparent from this description that the quality of the hydrocarbon compound mixture according to this invention can be steadily adjusted and optimized by fine-tuning of the process conditions such as reaction temperatures in the different compartments, residence times and back-flow ratios between the different compartments. Such fine-tuning can be better achieved if the process is running continuously and the process as described herein has such capability and can thus generate hydrocarbon compound mixtures with better quality.

According to a preferred embodiment of this invention, an inventive hydrocarbon compound mixture is obtained by a process, wherein the process by which it is obtained is a continuous process.

Since the pyrolysis reaction requires a continuous supply of thermal energy, a suitable energy source is important for an economic and efficient operation of the process described in this invention. Generally, it is possible to provide such energy in the form of fuels, e.g. by gas or oil burners. According to this invention it was found that the heating can be best achieved by electrical heating devices. Such electrical heating devices can be adjusted more precisely and faster than fuel-based and in particular syngas-based heating devices and that turned out to be a significant advantage for the fine-tuning of the temperature settings in the different compartments, in particular in the first compartment in which the major part of the pyrolysis reaction is taking place and where the temperature cannot be additionally controlled by reflux condensers.

According to a preferred embodiment of this invention, an inventive hydrocarbon compound mixture is obtained by a process, wherein the first compartment is heated by an electrical heater.

According to another preferred embodiment of this invention, an inventive hydrocarbon compound mixture is obtained by a process, wherein the first and the second compartment are heated by an electrical heater.

Some processes for the pyrolysis of plastic waste materials that are known in the art are trying to reduce the amount of waxes that can form during the pyrolysis process by separating them in an early stage of the process and to recover such waxes as solid products. However, in such processes further waxes can be formed during later stages of the pyrolysis process or may not be sufficiently removed. Consequently, such processes are usually producing pyrolysis oils with a significant amount of waxes, with the consequence that the final pyrolysis oils are not fully homogeneous, in particular at lower temperatures. The hydrocarbon compound mixtures according to this invention are obtained by a process that is designed not to separate waxes as a side stream but to crack such substances in a controlled manner to a degree, that they do not have any significant effect on the final hydrocarbon compound mixtures. For the same reason also the yield of the final hydrocarbon compound mixtures is higher than it would be if the waxes would be removed as solids and not be further pyrolyzed in the process.

According to a preferred embodiment of this invention, an inventive hydrocarbon compound mixture is obtained by a process, wherein the process by which it is obtained does not comprise a step for physically removing waxes from any of the pyrolysis compartments.

The plastic waste materials from which the inventive hydrocarbon compound mixtures can be produced can be any plastic waste as e.g. defined by the United Nations Environment Programme (UNEP), i.e. any discarded plastic (organic, or synthetic, material derived from polymers, resins or cellulose) generated by any industrial process, or by consumers. Discarded plastic generated by industrial processes are often well defined and may contain less undesired side materials. Discarded plastic waste generated by consumers does usually comprise a variety of plastic polymers of different composition and contain more undesired side materials such as food residues. Since the collection systems for plastic waste vary from country to country or even from community to community, the composition of the plastic waste materials that are intended to be pyrolyzed can be different. After the collection of the plastic waste the plastic waste is usually pretreated and separated from metals, paper and other components. According to the instant invention any of such common pretreated plastic waste material can be processed into the inventive hydrocarbon compound mixtures.

According to a preferred embodiment of this invention, an inventive hydrocarbon compound mixture is obtained by a process, wherein the plastic waste materials are post-consumer mixed plastic waste materials.

The hydrocarbon compound mixtures obtained according to this invention can represent one element of a circular economy concept for the recycling of plastic polymers into new plastic polymers. According to such a circular economy concept, after their use the plastic polymers will be collected and converted to the inventive hydrocarbon compound mixtures by applying the process steps described in this invention disclosure. The hydrocarbon compound mixtures can then be fed into the crude unit of an oil refinery in which it may be hydrotreated and further cracked to generate suitable feedstock e.g. for a steam cracker, or can be fed directly into a steam cracker, in which new monomers are created which can be processed to new plastic polymers.

Accordingly, it is an embodiment of this invention to use a hydrocarbon compound mixture according to this invention as feedstock for a refinery crude unit or a steam cracker.

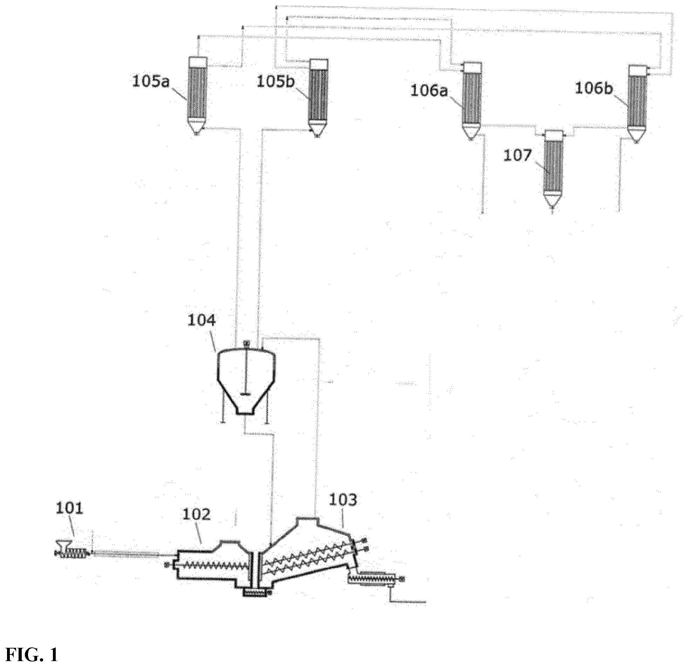

In the following, an apparatus in which the process steps described in this invention disclosure can be performed is described in more detail. The description of this apparatus is not meant to limit the general disclosure of this invention as described herein, but is merely serving the purpose to illustrate a good mode in which the process steps described in this invention can be performed. Figure 1 illustrates the description of such an apparatus.

The plastic waste material is fed to a densifier 101, e.g. by means of conveyor belts. The densifier compresses the plastic waste material. The compression may be achieved by one or more screw conveyors comprising the densifier 101. The compression heats the residual polymer product due to friction effects. The heating may result in that at least some of the polymer product melts, but the heating is sufficiently low so that no substantial chemical degradation takes place. However, the heating may cause generation of some water vapour from the polymer product which is advantageously removed. The densifier may be configured so that the residual polymer product is heated up to a temperature within a range from 150 to 200°C. The compressed, heated and possibly partially molten polymer product mixture is then transferred to the degasser 102, e.g. via a heated pipe, so that the partially molten polymer mixture will not solidify within the pipe.

The degasser 102 comprises a screw conveyor to move the residual polymer product from an inlet to a degasser exit. The degasser 102 comprises a heater such as an electrical heater for heating the polymer product to a final temperature within a range from 240 to 330 °C. A preferred exit temperature of the melted residual polymer product at the degasser exit may be a temperature within a range from 250 to 270 °C, preferably from 255 to 265 °C. The heating in the degasser 102 causes vaporization of substantially all water content along with other undesired volatiles as well as non-condensable gasses. Such undesired volatiles could contain undesired vapours such as corrosive gasses and vapours. The removal of such undesired volatiles may enable the use of less corrosion resistant materials for the downstream components of the apparatus such as the pyrolysis reactor and may thus represent not only a procedural but also an economic benefit.

To improve the quality of the hydrocarbon compound mixture produced in the apparatus, calcium oxide or other alkaline substances may be fed either to the densifier 101 or to the degasser 102. The addition of such alkaline substances can neutralize the acidic gases that are generated during the pyrolysis, in particular of chlorine containing polymers such as polyvinyl chloride.

In the displayed apparatus, the pyrolysis reactor 103, the first compartment of the process described in this invention, is arranged in an inclined way so that the level of the liquid mixture within the reactor is not reaching the upside end of the reactor. The pyrolysis reactor 103 comprises 2 reactor screw conveyors for moving and mixing the liquid mixture and to transport solid residues, in particular carbon black that is generated during the pyrolysis reaction, towards an outlet. The pyrolysis reactor 103 is heated by a heater such as an electrical heater for heating the reaction mixture to a temperature within a range from ≥400 to ≤500 °C to generate pyrolysis vapour. The temperature in the pyrolysis reactor may vary between the liquid phase at the entrance to the reactor, the liquid phase at the upper end of the reactor and the vapour phase. The temperature ranges mentioned above indicate the temperature of the vapour phase within the reactor and that applies to all embodiments of this invention described within this specification. Even the vapour temperature within a compartment may not always be constant because vapour with a higher temperature from a previous compartment may need some time to adjust to the new temperature settings applied in the consecutive compartment. In that case the vapour temperature at the exit of the respective compartment shall be used for the purpose of determining the temperature ranges described in this specification.

Upon heating, the reaction mixture is gradually pyrolyzed and a vapor comprising hydrocarbon compounds is formed and is leaving the pyrolysis reactor towards the second compartment, in this case an oil reactor in which again a liquid oil phase and a vapour phase are present.

The oil reactor 104 is a tank arranged to separate the pyrolysis vapour received from the pyrolysis reactor 103 into vapour components and liquid components. The oil reactor 104 may comprise an agitator for mixing the content. The pyrolysis vapours enter the oil reactor 104 via a nozzle in the top and/or by a dip pipe into the liquid phase of the tank. The tank temperature is adjustable within a temperature range of ≥350 and ≤450°C. For example, a temperature control system may be provided to control the tank temperature according to a desired temperature setpoint. The temperature in the oil reactor 104 can be controlled e.g. by an electrical heater. Between the oil reactor 104 and the pyrolysis reactor 103 is an interconnection that permits a controlled backflow from the oil reactor 104 to the pyrolysis reactor 103. By that means a fraction of the liquid in the oil reactor can be further exposed to the pyrolysis conditions in the pyrolysis reactor 103. Also in the oil reactor the temperature may vary between the oil phase and the vapour phase and the temperatures indicated above are referring to the temperature within the vapour phase.

In the displayed setup, the oil reactor 104 comprises two separator outlets for transferring the vapour generated in the oil reactor 104 to two reflux condensers 105a, 105b via respective pipes. The same pipes will lead condensed liquids from the reflux condensers 105a, 105b back to the oil reactor 104 via liquid outlets of the reflux condensers. These liquid outlets therefore also function as vapour inlets. The reflux condensers 105a, 105b are arranged to condense at least a fraction of the vapour components from the oil reactor 104 into liquid components. The apparatus is equipped with two reflux condensers to allow the further operation of the apparatus while one of the reflux condensers can be shut down for cleaning or maintenance. The two reflux condensers may be configured as shell and tube heat exchangers with pyrolysis vapours on the tube side and thermal oil for controlling the temperature on the shell side.

The vapour leaving the reflux condensers 105a and 105b move through pipe connections to the condensers 106a and 106b in which the vapour is condensed to a liquid pyrolysis oil. In the displayed set-up the condensers are again duplicated to allow maintenance and cleaning of one condenser while the apparatus can continue to operate. The condensers can be designed as common shell and tube heat exchangers. If it is desired to fractionate the pyrolysis oil, the condensers 106a and 106b can be set to a temperature in a range of e.g. ≥130 and ≤180°C and the vapour that pass the condensers at that temperature range can be further condensed in a condenser 107 set to a lower temperature to obtain a lighter fraction of the pyrolysis products such as naphtha.

It is a further aspect of this invention to provide a process for the conversion of plastic waste materials into liquid hydrocarbon compound mixtures having a cloud point of ≤15°C and being transparent in layers of 40 mm in thickness at 20°C in accordance with the relevant standard test method for measuring the cloud point.

It is in particular an aspect of this invention to provide a process for the conversion of plastic waste materials into liquid hydrocarbon compound mixtures having a cloud point of ≤15°C, measured according to ASTM D2500-23, and being transparent in layers of 40 mm in thickness at 20°C in accordance with the ASTM D2500-23 standard test method for measuring the cloud point.

According to a preferred embodiment an inventive process was found, wherein the process comprises the following steps:
A) melting and degassing the plastic waste material,
B) pyrolyzing the melted plastic waste material in an apparatus comprising at least 2 different pyrolysis compartments in which pyrolysis vapour is created, the vapour within the first of such compartments having a higher temperature than the vapour within the second compartment, and the at least 2 compartments having interconnections to allow vapour formed in the first compartment to move to the second compartment and to allow liquid formed in the second compartment moving back to the first compartment,
C) condensing the vapour resulting from the last of the at least 2 compartments to obtain a liquid hydrocarbon compound mixture.

According to another preferred embodiment an inventive process was found, wherein the process is a continuous process, and wherein the quality of the hydrocarbon compound mixture is controlled by applying the following steps:
i) adjusting the vapour temperature within the first compartment to a range between ≥400°C and ≤500°C,
ii) determining the quality of the hydrocarbon compound mixture obtained after process step C) by applying a method for measuring a quality parameter that correlates with the amount of such high molecular weight compounds in the hydrocarbon compound mixture that have a boiling point ≥410°C,
iii) gradually increasing or decreasing the vapour temperature within the first compartment until the quality parameter has reached a value corresponding to a predetermined quality parameter threshold.

Suitable methods for measuring a quality parameter that correlate with the amount of such high molecular weight compounds in the hydrocarbon compound mixture that have a boiling point ≥410°C are, by way of example, the ASTM D2500-23 method for measuring the cloud point, or the ASTM2887-22 method for measuring the final boiling point, but according to this specific embodiment also other methods can be used that may result in a similar quality determination. If, by way of example, a cloud point measurement is used such as ASTM D2500-23, and the transparency of the final hydrocarbon compound mixture does not meet the transparency requirement of that method, the vapour temperature within the first pyrolysis compartment can first be increased or decreased until the transparency requirement is met and then further until the desired quality parameter threshold is achieved. Such a desired quality parameter threshold can be, e.g., a cloud point of ≤15°C, but also other quality parameter thresholds corresponding to a quality specification established by the manufacturer of the hydrocarbon compound mixture can be used.

All preferred aspects and embodiments that are described in this invention disclosure in relation to the hydrocarbon compound mixtures and in relation to the process steps by which the hydrocarbon compound mixtures are obtained shall also be deemed to be preferred aspects and embodiments of the inventive process, either solely or in the combination as indicated in the claims of this invention.

## Claims

1. A hydrocarbon compound mixture having a cloud point of ≤15°C and being transparent in layers of 40 mm in thickness at 20°C in accordance with the relevant standard test method for measuring the cloud point, obtained by a process of converting plastic waste materials into liquid hydrocarbon compound mixtures.

2. A hydrocarbon compound mixture according to any of the preceding claims, wherein the hydrocarbon mixture has a final boiling point for 99.5wt% of the mixture of ≤430°C.

3. A hydrocarbon compound mixture according to any of the preceding claims, obtained by a process comprising the following steps:
A) melting and degassing the plastic waste material,
B) pyrolyzing the melted plastic waste material in an apparatus comprising at least 2 different pyrolysis compartments in which pyrolysis vapour is created, the vapour within the first of such compartments having a higher temperature than the vapour within the second compartment, and the at least 2 compartments having interconnections to allow vapour formed in the first compartment to move to the second compartment and to allow liquid formed in the second compartment moving back to the first compartment,
C) condensing the vapour resulting from the last of the at least 2 compartments to obtain a liquid hydrocarbon compound mixture.

4. A hydrocarbon compound mixture according to any of the preceding claims wherein the vapour temperature within the first compartment is set to a range between ≥400°C and ≤500°C, preferably between ≥420°C and ≤460°C.

5. A hydrocarbon compound mixture according to any of the preceding claims, wherein the vapour temperature within the second compartment is set to a range between ≥350°C and ≤450°C, preferably between ≥370°C and ≤400°C.

6. A hydrocarbon compound mixture according to any of the preceding claims, wherein the vapour temperature within the first compartment is at least 10°C higher than the vapour temperature within the second compartment, preferably at least 20°C higher and even more preferably at least 30°C higher.

7. A hydrocarbon compound mixture according to any of the preceding claims, wherein the average residence time of the reaction mixture in the first compartment is between 30 and 240 minutes, preferably between 90 and 150 minutes.

8. A hydrocarbon compound mixture according to any of the preceding claims, wherein the average residence time of the reaction mixture in the second compartment is between 30 and 240 minutes, preferably between 90 and 150 minutes.

9. A hydrocarbon compound mixture according to any of the preceding claims, wherein the apparatus comprises 3 different compartments and the third compartment having a lower vapour temperature than the second compartment, and the second and the third compartments having one or more interconnections to allow vapour formed in the second compartment to move to the third compartments, and to allow liquid formed in the third compartment moving back to the second compartment.

10. A hydrocarbon compound mixture according to any of the preceding claims, wherein the vapour exit temperature of the third compartment is set to a range between ≥230°C and ≤270°C, preferably between ≥240°C and ≤260°C.

11. A hydrocarbon compound mixture according to any of the preceding claims, wherein the vapour exit temperature of the unit in which the condensation of step C) is taking place is set to a value below 180°C.

12. A hydrocarbon compound mixture according to any of the preceding claims, wherein the condensation of step C) is taking place in more than one condensing units and at least 2 of such condensing units are operated at different temperatures.

13. A hydrocarbon compound mixture according to any of the preceding claims, wherein the process by which it is obtained is a continuous process.

14. A hydrocarbon compound mixture according to any of the preceding claims, wherein all of the at least 2 compartments are arranged in a way that the first compartment is located at the lowest level and the consecutive compartment(s) is/are located above the respective prior compartment.

15. A hydrocarbon compound mixture according to any of the preceding claims, wherein the first compartment is heated by an electrical heater.

16. A hydrocarbon compound mixture according to any of the preceding claims, wherein the first and the second compartment are heated by an electrical heater.

17. A hydrocarbon compound mixture according to any of the preceding claims, wherein the process by which it is obtained does not comprise a step for physically removing waxes from any of the compartments.

18. A hydrocarbon compound mixture according to any of the preceding claims, wherein the plastic waste materials are post-consumer mixed plastic waste materials.

19. A process for the conversion of plastic waste materials into liquid hydrocarbon compound mixtures having a cloud point of ≤15°C and being transparent in layers of 40 mm in thickness at 20°C in accordance with the relevant standard test method for measuring the cloud point.

20. A process according to claim 19, wherein the process comprises the following steps:
A) melting and degassing the plastic waste material,
B) pyrolyzing the melted plastic waste material in an apparatus comprising at least 2 2 different pyrolysis compartments in which pyrolysis vapour is created, the vapour within the first of such compartments having a higher temperature than the vapour within the second compartment, and the at least 2 compartments having interconnections to allow vapour formed in the first compartment to move to the second compartment and to allow liquid formed in the second compartment moving back to the first compartment,
C) condensing the vapour resulting from the last of the at least 2 compartments to obtain a liquid hydrocarbon compound mixture.

21. A process according to claim 19 and 20 comprising the process steps according to any of the claims 4 to 17.

22. A process according to claim 19, wherein the process is a continuous process, and wherein the quality of the hydrocarbon compound mixture is controlled by applying the following steps:
i) adjusting the vapour temperature within the first compartment to a range between ≥400°C and ≤500°C,
ii) determining the quality of the hydrocarbon compound mixture obtained after process step C) by applying a method for measuring a quality parameter that correlates with the amount of such high molecular weight compounds in the hydrocarbon compound mixture that have a boiling point ≥410°C,
iii) gradually increasing or decreasing the vapour temperature within the first compartment until the quality parameter has reached a value corresponding to a predetermined quality parameter threshold.

23. The use of a hydrocarbon compound mixture according to any of the previous claims as feedstock for a refinery crude unit or a steam cracker.
